# EUROPÄISCHE PATENTSCHRIFT

(11) **EP 0 773 383 B1**
(45) Veröffentlichungstag und Bekanntmachung des Hinweises auf die Patenterteilung: **18.07.2001**
(21) Anmeldenummer: 96116668.3
(22) Anmeldetag: 26.10.1996
(51) Int. Cl.: F16D 3/84, F16J 3/04

(54) **Schutzvorrichtung für Gelenkwellen mit einem abnehmbaren Schutztrichter**
Protective device for articulated shafts with removable protective cone
Dispositif de protection pour un arbre articulé avec entonnoir protecteur amovible

(30) Priorität: 08.11.1995 DE 19541511
(43) Veröffentlichungstag der Anmeldung: 14.05.1997
(73) Patentinhaber: GKN Walterscheid GmbH, 53797 Lohmar (DE)
(72) Erfinder: Herchenbach, Paul, 53809 Ruppichteroth (DE); Kretschmer, Horst, Dipl.-Ing., 51145 Köln (DE)
(74) Vertreter: Harwardt, Günther, Dipl.-Ing.

(56) Entgegenhaltungen:
- DE-C- 3 208 541
- GB-A- 2 102 526

## Beschreibung

Die Erfindung betrifft eine Schutzvorrichtung für eine Gelenkwelle, wobei die Gelenkwelle aus zwei Kreuzgelenken, umfassend jeweils zwei Gelenkgabeln und ein beide gelenkig verbindendes Zapfenkreuz, und aus einer aus zwei ineinandergesteckten Schiebeprofilen bestehenden Verbindungswelle, welche mit jeweils einer der Gelenkgabeln der beiden Kreuzgelenke verbunden sind, aufgebaut ist, mit zwei zur koaxialen Anordnung zu der Verbindungswelle und zur Längsachse derselben bestimmten, ineinandergesteckten Schutzrohren, mit jeweils einer Anschlußkappe, einem Gleitring und einem Schutztrichter je Gelenk, der zur zumindest teilweisen axialen Überdeckung des zugehörigen Gelenkes bestimmt ist, wobei jeweils ein Schutztrichter, ein Schutzrohr sowie ein Gleitring mit einer Anschlußkappe verbunden sind und der Gleitring zur Lagerung in einer Nut einer Gelenkgabel des zugehörigen Gelenkes bestimmt ist und der Schutztrichter auch bei an der Gelenkwelle montierter Schutzvorrichtung lösbar an der Anschlußkappe festgelegt ist, wobei die Anschlußkappe mit einer Sitzfläche ausgestattet ist, auf welche der Schutztrichter mit einem Befestigungsabschnitt aufsteckbar und mittels Riegelmitteln festlegbar und durch manuellen Eingriff lösbar ist.

Eine solche Schutzvorrichtung ist in der DE 32 08 541 C2 beschrieben. Zur lösbaren Verbindung zwischen dem Schutztrichter und der Anschlußkappe wird der Schutztrichter im Bereich seines Befestigungsabschnittes mit parallel zur Längsachse verlaufenden Durchlässen für der Anschlußkappe zugeordnete Sperrzungen versehen. Nach Passieren der Sperrzungen wird der Schutztrichter um einen bestimmten Winkelweg gegenüber der Anschlußkappe verdreht, so daß die Sperrzungen den Befestigungsabschnitt des Schutztrichters in dieser Stellung axial festlegen. Diese Maßnahme ist jedoch nicht ausreichend, um eine sichere Festlegung für alle Betriebszustände zu erreichen, denn es treten während der Rotation der Gelenkwelle im Verhältnis zum stillstehenden Schutz Vibrationen auf, die eine Verlagerung des Schutztrichters gegenüber den Sperrzungen ermöglichen könnten. Aus diesem Grunde sind zusätzliche Maßnahmen vorgesehen, beispielsweise in Form einer Schraube, die den Schutztrichter im Verhältnis zur Anschlußklappe auch in Drehrichtung festlegt, wenn sie festgezogen wird.

Der Erfindung liegt die Aufgabe zugrunde, eine Schutzvorrichtung vorzuschlagen, bei der mit dem Aufschieben des Schutztrichters mit seinem Befestigungsabschnitt auf die entsprechende Sitzfläche der Anschlußkappe eine Verriegelung des Schutztrichters zur Anschlußkappe sowohl im Drehsinne als auch in axialer Richtung gegen Abziehen erzielt wird.

Diese Aufgabe wird erfindungsgemäß dadurch gelöst, daß der Befestigungsabschnitt des Schutztrichters und die Anschlußkappe Mittel zur formschlüssigen Verbindung der beiden in Drehrichtung um die Längsachse aufweisen, welche, bezogen auf die Längsachse, ein axiales Aufschieben und Abziehen des Schutztrichters erlauben, daß die Anschlußkappe und der Befestigungsabschnitt des Schutztrichters mit Anschlägen zur Festlegung des Schutztrichters in einer Richtung entlang der Längsachse von dem angeschlossenen Schutzrohr weg versehen sind und daß ferner mindestens ein federnder Riegel vorhanden ist, der beim Aufschieben des Schutztrichters mit seinem Befestigungsabschnitt auf die Sitzfläche der Anschlußkappe in eine zurückgezogene Position überführbar ist und nach Erreichen der Montageposition der beiden zueinander den Befestigungsabschnitt mit einer Riegelfläche, die an einer entsprechenden Gegenfläche des Befestigungsabschnittes angreift, in Richtung auf das Schutzrohr zu festlegt.

Von Vorteil bei dieser Maßnahme ist, daβ die Sitzverhältnisse von Schutztrichter und Anschlußkappe so ausgelegt werden können, daß der Schutztrichter zur Freigabe der Gelenkbauteile leicht nach Betätigung der federnden Riegel zurückgeschoben werden kann und trotzdem durch den Formschluß in Drehrichtung um die Längsachse nach dem Wiederaufschieben kein Losrütteln durch auftretende Vibrationen möglich ist. Das Zurückschieben des Trichters ist erforderlich, um die von diesem abgedeckten Gelenkbauteile zugänglich zu machen, um beispielsweise die Zapfenkreuzgarnitur des überdeckten Gelenkes oder die Lagerstelle für die Schutzvorrichtung auf der Gelenkgabel des überdeckten Gelenkes für die Schiebeprofile zur Abschmierung zugänglich zu machen. Durch Aufschieben des Schutztrichters mit seinem Befestigungsabschnitt auf die entsprechende Sitzfläche der Anschlußkappe werden die federnden Riegel selbsttätig aktiv, indem sie nach Erreichen der Montageposition von Anschlußkappe und Befestigungsabschnitt zueinander automatisch unter der Federkraft den Befestigungsabschnitt im Bereich seiner Gegenfläche hintergreifen und somit den Schutztrichter zur Anschlußkappe in Richtung der Längsachse festlegen. Die drehfeste Verbindung wird durch den Formschluß zwischen dem Befestigungsabschnitt und der Anschlußkappe erzielt.

Eine besonders günstige Gestaltung wird dadurch erzielt, daß der federnde Riegel dem Gleitring zugeordnet und einstückig mit diesem ausgebildet ist. Der Gleitring ist in der Regel aus einem hochwertigen Kunststoff hergestellt, der auch günstige federnde Eigenschaften aufweist. Somit ist es besonders günstig, wenn der bzw. die Riegel diesem zugeordnet ist/sind und beispielsweise im Wege des Spritzgießens einstückig mit dem Gleitring hergestellt wird/werden.

Es ist aber auch eine Zuordnung zur Anschlußkappe möglich, wobei jedoch dann für diese ein entsprechender Kunststoff als Material gewählt werden muß, um die federnden Eigenschaften zu gewährleisten.

Vorzugsweise besteht der Gleitring aus einem Polyamid als Kunststoff. Um auf Dauer auszuschließen, daß auch ein Kriechen des Kunststoffes oder sonstige Ermüdungserscheinungen zum Ausfall der federnden Eigenschaften des Riegels führen können, ist dem federnden Riegel zur Unterstützung eine metallene Blattfeder zugeordnet. Diese kann vorzugsweise aus einem nicht rostenden Metall bestehen.

Vorzugsweise sind zwei um 180° um die Längsachse umfangsversetzte federnde Riegel am Gleitring vorgesehen. Die Schutzkappe weist entsprechende Durchbrüche auf, durch die der federnde Riegel mit seiner Riegelfläche radial in den Bereich der Gegenfläche des Befestigungsabschnittes durchtreten kann.

Eine günstige Gestaltung ergibt sich durch die Anordnung der Gegenfläche des Befestigungsabschnittes in einem radialen Durchbruch oder in einem axialen Ausschnitt. Hierdurch ist gewährleistet, daß der Sperriegel geschützt untergebracht ist und nicht unabsichtlich in seine entriegelte Position überführt werden kann, denn er ragt nicht axial von der Anschlußkappe vor. Vorzugsweise ist bei der Anordnung von zwei um 180° zueinander umfangsversetzten federnden Riegeln vorgesehen, die Gegenfläche für einen Riegel in einem Durchbruch des Befestigungsabschnittes und für den anderen Riegel in einem axialen Ausschnitt anzuordnen. Hierdurch wird erzielt, daß durch die umgrenzte Anordnung in einem Durchbruch ein Öffnen des Riegels nur durch Einsatz eines Werkzeuges ermöglicht wird, während der weitere Riegel durch Druck beispielsweise mit dem Daumen der Hand der Bedienungsperson geöffnet werden kann.

Hierdurch wird im wesentlichen eine Zwei-Hand-Bedienung erzielt, so daß eine Hand zum Öffnen des einen Riegels und die andere unter Einsatz eines Werkzeuges zum Öffnen des anderen Riegels benutzt werden muß. Insgesamt wird hiermit erreicht, daß nur bewußt ein Öffnen und damit Abziehen des Schutztrichters von seiner Montageposition auf der Anschlußkappe möglich ist.

Bei einer solchen Anordnung der Gegenfläche ist in Konkretisierung der Erfindung vorgesehen, die Riegelfläche des federnden Riegels als Bestandteil einer nach außen von der Längsachse wegweisenden Nase auszubilden. Dabei kann die Nase zur Überführung des Riegels in die zurückgezogene Position für den Aufschiebevorgang des Schutztrichters mit seinem Befestigungsabschnitt auf die Anschlußkappe in die Montageposition mit einer Anlauffläche versehen sein, die mit dem Befestigungsabschnitt zusammenarbeitet. Nach Erreichen der Montageposition federt der Riegel automatisch nach außen und legt sich mit seiner Riegelfläche hinter die Gegenfläche des Befestigungsabschnittes. Hierbei kann die Nase mit einer Vertiefung zum Angriff eines Werkzeuges, beispielsweise eines Schraubendrehers versehen sein, der von Hand in die Vertiefung eingeführt wird und danach durch Kippen sich gegen die Wandung des Durchbruches anlegt und somit ein Aufhebeln des federnden Riegels erzielen läßt.

Nach einer weiteren Ausgestaltung der Erfindung ist der Schutztrichter mehrteilig ausgebildet und er besteht aus einem Bauteil, das den Befestigungsabschnitt darstellt und aus einem Schutzelement. Hierdurch ist es möglich, den Befestigungsabschnitt selbst relativ steif auszubilden, während das Schutzelement in der geforderten Richtung, nämlich Axialrichtung, weicher gestaltet werden kann. Der Befestigungsabschnitt und das Schutzelement sind danach fest miteinander, beispielsweise durch Formschluß, verbunden und zum gemeinsamen Verbinden oder Lösen mit der Anschlußkappe vorgesehen.

Nach einem weiteren wichtigen Ausgestaltungsmerkmal wird die formschlüssige Verbindung dadurch erreicht, daß die Anschlußkappe um die Längsachse umfangsverteilte und radial nach außen über die Sitzfläche vorstehende Keile und der Befestigungsabschnitt des Schutztrichters entsprechend verteilte und ausgebildete, parallel zur Längsachse verlaufende Nuten aufweist.

Ein bevorzugtes Ausführungsbeispiel der erfindungsgemäßen Schutzvorrichtung und die wesentlichen Einzelteile sind in der Zeichnung schematisch in Anwendung auf eine Gelenkwelle für den Antrieb einer Landmaschine dargestellt.

Es zeigt
- Figur 1: eine für den Antrieb von Landmaschinen vorgesehene landwirtschaftliche Gelenkwelle im Halblängsschnitt mit einer erfindungsgemäßen Schutzvorrichtung,
- Figur 2: im vergrößerten Maßstab die Anordnung des Schutztrichters mit dem Befestigungsabschnitt für das in Figur 1 dargestellte linke Gelenk im Längsschnitt gemäß Schnittlinie II-II von Figur 3,
- Figur 2a: das Detail X gemäß Figur 2 im nochmals vergrößerten Maßstab,
- Figur 3: einen Schnitt III-III gemäß Figur 2 und
- Figur 4: eine Ansicht mit einem Schnittverlauf vergleichbar zu Figur 2, wobei jedoch der Schutztrichter von der Anschlußkappe abgezogen ist.

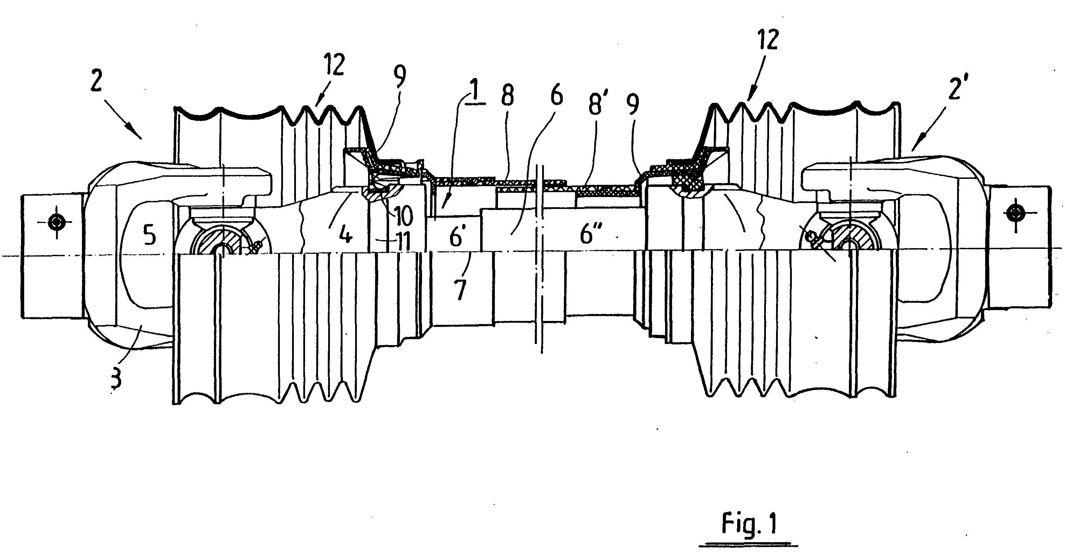

In Figur 1 ist eine Gelenkwelle 1 mit einer erfindungsgemäßen Schutzvorrichtung dargestellt. Die Gelenkwelle 1 umfaßt zwei Kreuzgelenke 2, 2'. Jedes der beiden Kreuzgelenke 2,2' besteht aus zwei Gelenkgabeln 3, 4, von denen eine zum Anschluß an ein treibendes oder getriebenes Glied, beispielsweise eine Zapfwelle eines Traktors, bzw. den Antriebszapfen eines landwirtschaftlichen Gerätes, bestimmt ist und wobei die beiden Gelenkgabeln 3, 4 durch ein Zapfenkreuz 5 gelenkig miteinander verbunden sind.

Zwischen den beiden Kreuzgelenken 2, 2' ist eine Verbindungswelle 6 angeordnet, die aus zwei ineinandergesteckten und teleskopierbaren Schiebeprofilen 6', 6'' besteht.

Die Längenveränderung erfolgt entlang der Längsachse 7.

Die Schutzvorrichtung umfaßt zwei koaxial zu den Schiebeprofilen 6', 6'' angeordnete Schutzrohre 8, 8', die mittels Anschlußkappen 9 und Gleitring 10, der in eine Nut 11 der zugehörigen Gelenkgabel 4 eingreift, am Gelenk festgelegt sind. Ferner ist jeder Anschlußkappe 9 ein Schutztrichter 12 zugeordnet, der das darunter befindliche Kreuzgelenk 2, 2' zumindest teilweise überdeckt. Bei Betrieb ist die Schutzvorrichtung beispielsweise durch eine Kette oder ein sonstiges Glied festgelegt, so daß nur die Gelenkwelle 1 rotiert und die Schutzvorrichtung feststeht.

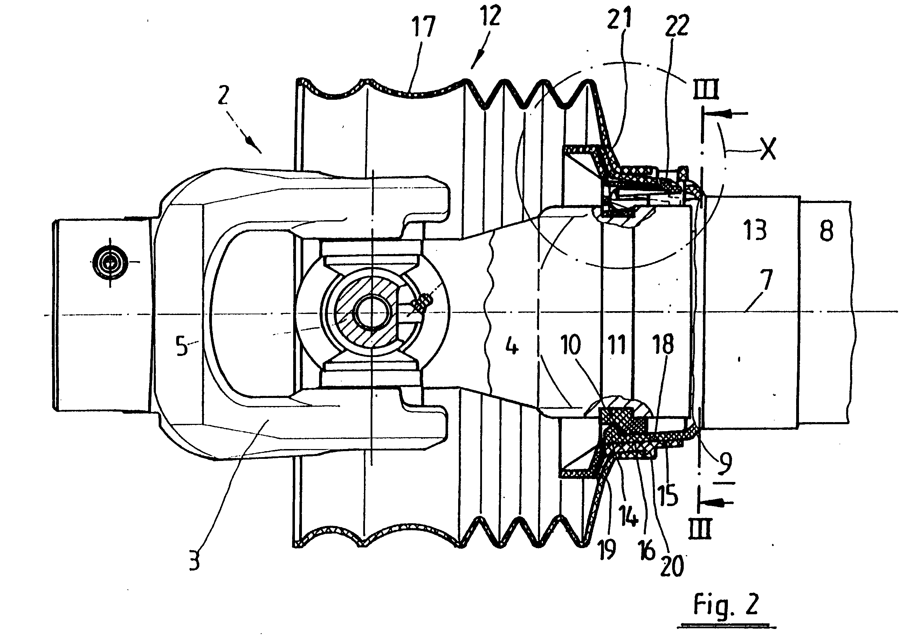

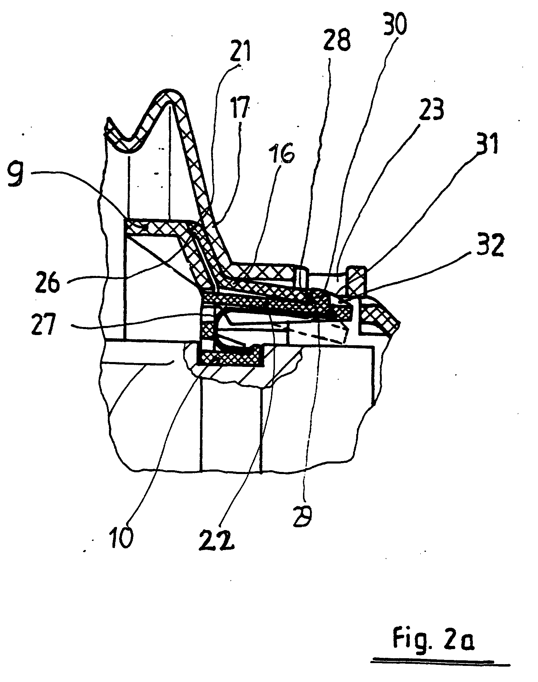

Wie aus den Figuren 2, 2a ersichtlich, umfaßt die Anschlußkappe 9 eine Sitzfläche 15 für den Schutztrichter 12, einen rohrförmigen Abschluß als Schutzrohranschluß 13 zur Verbindung mit dem Schutzrohr 8 sowie Mittel zur Festlegung gegenüber dem Gleitring 10. Diese Mittel bestehen aus einer Riegelnase 14, die den Gleitring 10 in axialer Richtung zwischen zwei Anschlägen festlegt. Darüber hinaus hält die Anschlußkappe 9 den Gleitring 10 in radialer Richtung gegen Aufweitung. Dem Gleitring 10 sind in Richtung auf das Schutzrohr 8, das heißt im wesentlichen in Richtung der Längsachse 7 vorstehend zwei federnde Riegel 22 angeformt, die um 180° um die Längsachse herum versetzt zueinander angeordnet sind.

Jeder federnde Riegel 22 besitzt an seinem freien Ende eine Nase 30, die von der Längsachse 7 radial nach außen vorragt und in Richtung auf das zugehörige Kreuzgelenk 2 zu eine Riegelfläche 28 besitzt. In Richtung auf das Schutzrohr 8 zu besitzt die Nase 30 eine schräg verlaufende Anlauffläche 31, in der eine Vertiefung 32 zum Angriff eines Werkzeuges angebracht ist.

Der Schutztrichter 12 besteht aus einem Schutzelement 17 aus einem ersten Werkstoff und einem Befestigungsabschnitt 16 aus einem Werkstoff höherer Qualität. Es ist jedoch auch möglich, daß bei Vorliegen eines entsprechenden Materiales und Vorliegen entsprechender Herstellungsmethoden der Befestigungsabschnitt 16 und das Schutzelement 17 ein Bauteil darstellen können.

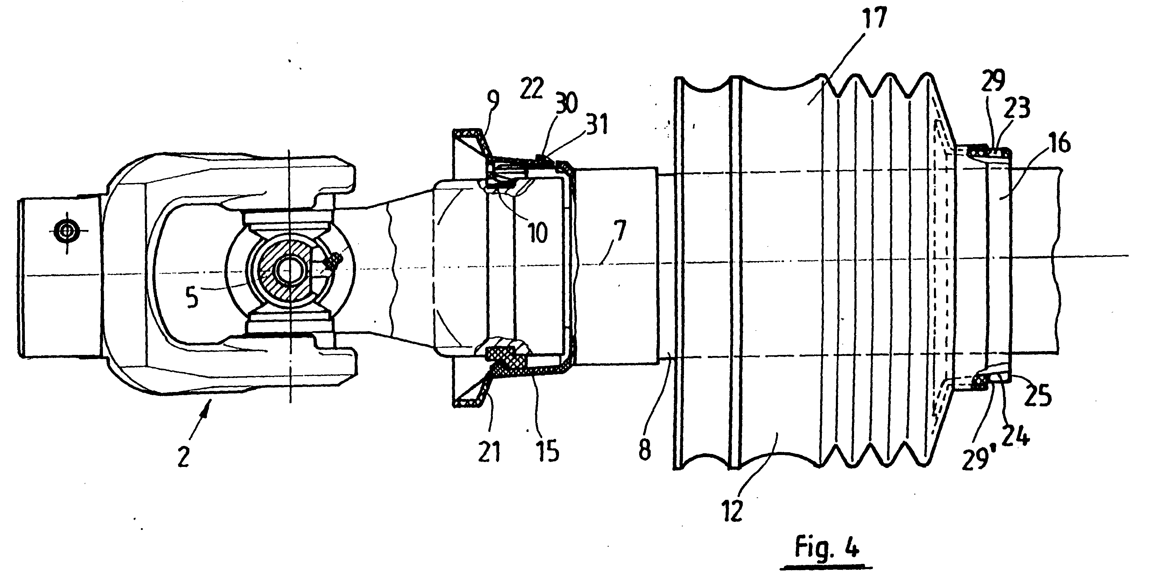

Der Befestigungsabschnitt 16 besitzt eine Bohrung 18, die zur Sitzfläche 15 der Anschlußkappe 9 passend ausgebildet ist. Ferner besitzt der Befestigungsabschnitt 16 zwei Anschläge 19, 20, zwischen denen das Schutzelement 17 festgelegt ist. Somit bilden Schutzelement 17 und Befestigungsabschnitt 16 im wesentlichen ein Bauteil, das entweder auf die Anschlußkappe 9 aufgeschoben oder von dieser gelöst werden kann. Zur Festlegung des Befestigungsabschnittes 16 und damit des Schutztrichters 12 auf der Anschlußkappe 9 dienen in Richtung der Längsachse 7 Anschläge 21, 26 einerseits und zwei federnde Riegel 22 mit einer Riegelfläche 28 andererseits, die an die entsprechende Gegenflächen 29, 29' des Befestigungsabschnittes 16 zur Anlage kommen. Die beiden Anschläge 21, 26 sichern den Schutztrichter 12 gegen eine Bewegung in Richtung auf das Kreuzgelenk 2 zu, während die Riegelflächen 28 in Verbindung mit den Gegenflächen 29 oder 29' zur Sicherung in der dazu entgegengesetzten Richtung entlang der Längsachse 7 dienen. Dabei ist die Gegenfläche 29 Bestandteil eines radialen Durchbruches 23 des Befestigungsabschnittes für einen ersten Riegel 22 und die Gegenfläche 29' Bestandteil eines Ausschnittes 24 für einen zweiten Riegel 22. Der Ausschnitt 24 geht von der Endfläche 25 des Befestigungsabschnittes 16 aus. Er ist zu dieser hin offen. Die Lage des Durchbruches 23 und des Ausschnittes 24 sind am besten aus Figur 4 erkennbar.

Durch die Anordnung der Nase 30 eines federnden Riegels 22 in einem Durchbruch 23 ist es nicht möglich, diesen von Hand zu betätigen. Hierzu ist ein Werkzeug erforderlich, beispielsweise ein Schraubendreher, der mit seiner Spitze in die Vertiefung 23 eingesteckt und so beaufschlagt werden kann.

Es ist zur Sicherung zusätzlich möglich, die Riegelfläche 28 und Gegenfläche 29 bzw. 29' geringfügig geneigt verlaufen zu lassen, so daß sich bei Beaufschlagung durch den Befestigungsabschnitt 16 in Richtung der Längsachse 7 auf das angeschlossene Schutzrohr 8 zu eine positive Verriegelung ergibt. Die Nase 30 des zweiten Riegels, der mit dem Ausschnitt 24 zusammenwirkt und nicht besonders dargestellt ist, kann aufgrund der Gestaltung als Ausschnitt von Hand betätigt werden, so daß für das Lösen des Schutztrichters 12 von der Anschlußkappe 9 ein Riegel 22 von Hand und der andere nur mit einem Werkzeug gelöst werden kann.

Um zu gewährleisten, daß der federnde Riegel auch bei Eintritt eventueller Ermüdung seine Riegelfunktion nicht verliert, ist diesem eine Blattfeder 27 zugeordnet, die ihn unterstützt. Dabei stützt sich das eine Ende der Blattfeder 27 gegen die Unterseite des federnden Riegels 22 und die andere Seite gegen den Gleitring 10 ab.

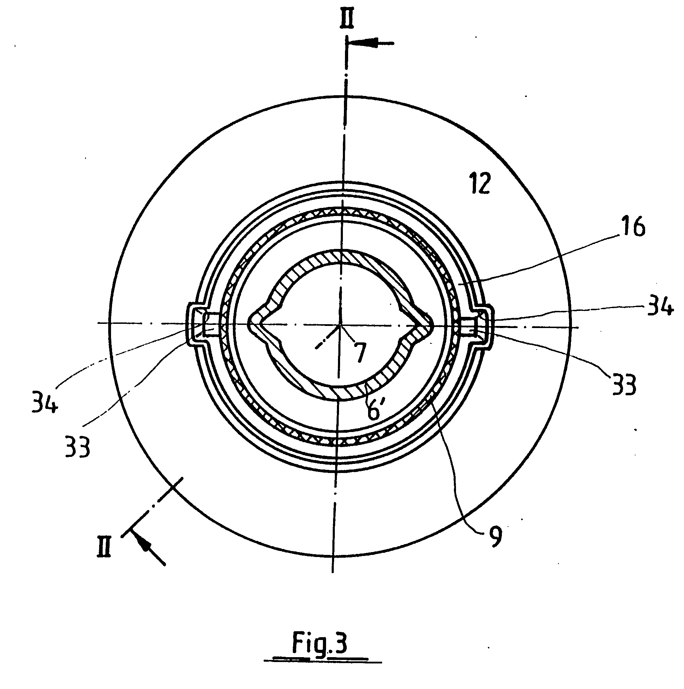

Aus Figur 3 ist erkennbar, daß der Schutztrichter 12 zusätzlich in Drehrichtung um die Längsachse 7 herum an der Anschlußkappe 9 festgelegt ist. Hierzu ist, wie Figur 3 zu entnehmen ist, die Anschlußkappe 9 mit zwei um 180° versetzten Keilen 33 versehen, die zu ihrem Ende, das heißt in Richtung auf das Schutzrohr 8 hin geneigte Flächen aufweisen, die ein leichteres Aufschieben und Zentrieren des Befestigungsabschnittes 16 mit seinen Nuten 34 erlauben. Im montierten Zustand liegen die Keile 33 und Nuten 34 jedoch mit ebenen Fläche aneinander, so daß eine Sicherung in Drehrichtung gegeben ist.

In der Figur 4 ist der Schutztrichter 12 in seiner von der Anschlußkappe in Richtung auf das Schutzrohr 8 abgezogenen Position dargestellt, so daß das Kreuzgelenk 2 für eine Abschmierung beispielsweise der Lagerung des Zapfenkreuzes 5 bzw. des Gleitringes 10 und der Schiebeteile zugänglich ist. Wird der Schutztrichter 12 ausgehend von seiner in Figur 4 dargestellten Position wieder auf die Anschlußkappe 9 mit seinem Befestigungsabschnitt 16 aufgeschoben, so trifft die Anschlußkappe 9 mit ihrer Bohrung auf die Anlauffläche 31 der federnden Riegel 22 und läßt diese in eine bezogen auf die Längsachse 7 angenäherte Position zurückfedern, damit der Befestigungsabschnitt 16 die Nase 30 passieren kann, bis die Montageposition erreicht ist und die Nase 30 wieder radial auswärts zur Festlegung des Befestigungsabschnittes 16 federn kann.

### Bezugszeichenliste

- 1: Gelenkwelle
- 2, 2': Kreuzgelenk
- 3, 4: Gelenkgabel
- 5: Zapfenkreuz
- 6: Verbindungswelle
- 6', 6": Schiebeprofile
- 7: Längsachse
- 8, 8': Schutzrohr
- 9: Anschlußkappe
- 10: Gleitring
- 11: Nut
- 12: Schutztrichter
- 13: Schutzrohranschluß
- 14: Riegelnase
- 15: Sitzfläche
- 16: Befestigungsabschnitt
- 17: Schutzelement
- 18: Bohrung
- 19, 20: Anschlag am Befestigungsabschnitt
- 21: Axialanschlag an der Anschlußkappe
- 22: federnder Riegel
- 23: Durchbruch im Befestigungsabschnitt
- 24: Ausschnitt im Befestigungsabschnitt
- 25: Endfläche des Befestigungsabschnittes
- 26: Axialanschlag am Befestigungsabschnitt
- 27: Blattfeder
- 28: Riegelfläche
- 29, 29': Gegenfläche
- 30: Nase
- 31: Anlauffläche
- 32: Vertiefung
- 33: Keil
- 34: Nut

## Patentansprüche

1. Schutzvorrichtung für eine Gelenkwelle (1), wobei die Gelenkwelle (1) aus zwei Kreuzgelenken (2, 2'), umfassend jeweils zwei Gelenkgabeln (3, 4) und ein beide gelenkig verbindendes Zapfenkreuz (5), und aus einer aus zwei ineinandergesteckten Schiebeprofilen (6', 6'') bestehenden Verbindungswelle (6), welche mit jeweils einer der Gelenkgabeln (4) der beiden Kreuzgelenke (2, 2') verbunden sind, aufgebaut ist, mit zwei zur koaxialen Anordnung zu der Verbindungswelle (6) und zur Längsachse (7) derselben bestimmten, ineinandergesteckten Schutzrohren (8, 8'), mit jeweils einer Anschlußkappe (9), einem Gleitring (10) und einem Schutztrichter (12) je Kreuzgelenk (2, 2'), der zur zumindest teilweisen axialen Überdeckung des zugehörigen Kreuzgelenkes (2, 2') bestimmt ist, wobei jeweils ein Schutztrichter (12), ein Schutzrohr (8, 8') sowie ein Gleitring (10) mit einer Anschlußkappe (9) verbunden sind und der Gleitring (10) zur Lagerung in einer Nut (11) einer Gelenkgabel (4) des zugehörigen Kreuzgelenkes (2, 2') bestimmt ist und der Schutztrichter (12) auch bei an der Gelenkwelle montierter Schutzvorrichtung lösbar an der Anschlußkappe (9) festgelegt ist, wobei die Anschlußkappe (9) mit einer Sitzfläche (15) ausgestattet ist, auf welche der Schutztrichter (12) mit einem Befestigungsabschnitt (16) aufsteckbar und mittels Riegelmitteln festlegbar und
durch manuellen Eingriff lösbar ist,
dadurch gekennzeichnet,
daß der Befestigungsabschnitt (16) des Schutztrichters (12) und die Anschlußkappe (9) Mittel (33, 34) zur formschlüssigen Verbindung zwischen beiden in Drehrichtung um die Längsachse (7) aufweisen, welche, bezogen auf die Längsachse (7), ein axiales Aufschieben und Abziehen des Schutztrichters (12) erlauben, daß die Anschlußkappe (9) und der Befestigungsabschnitt (16) des Schutztrichters (12) mit Anschlägen (21, 26) zur Festlegung des Schutztrichters (12) in einer Richtung entlang der Längsachse (7) von dem angeschlossenen Schutzrohr (8, 8') weg versehen sind und daß ferner mindestens ein federnder Riegel (22) vorhanden ist, der beim Aufschieben des Schutztrichters (12) mit seinem Befestigungsabschnitt (16) auf die Sitzfläche (15) der Anschlußkappe (9) in eine zurückgezogene Position überführbar ist und nach Erreichen der Montageposition der beiden zueinander den Befestigungsabschnitt (16) mit einer Riegelfläche (28), die an einer entsprechenden Gegenfläche (29, 29') des Befestigungsabschnittes (16) angreift, in Richtung auf das Schutzrohr (8, 8') zu festlegt.

2. Schutzvorrichtung nach Anspruch 1,
dadurch gekennzeichnet,
daß der federnde Riegel (22) dem Gleitring (10) zugeordnet und einstückig mit diesem ausgebildet ist.

3. Schutzvorrichtung nach einem der Ansprüche 1 oder 2,
dadurch gekennzeichnet,
daß der Gleitring (10) aus Kunststoff, insbesondere Polyamid besteht und dem federnden Riegel (22) zur Unterstützung eine metallene Blattfeder (27) zugeordnet ist.

4. Schutzvorrichtung nach einem der Ansprüche 1 bis 3,
dadurch gekennzeichnet,
daß zwei um 180° um die Längsachse (7) umfangsversetzte federnde Riegel (22) vorgesehen sind.

5. Schutzvorrichtung nach einem der Ansprüche 1 bis 4,
dadurch gekennzeichnet,
daß die Gegenfläche (29) des Befestigungsabschnittes (16) in einem radialen Durchbruch (23) des Befestigungsabschnittes (16) angeordnet ist.

6. Schutzvorrichtung nach einem der Ansprüche 1 bis 4,
dadurch gekennzeichnet,
daß die Gegenfläche (29') des Befestigungsabschnittes (16) in einem Ausschnitt (24) des Befestigungsabschnittes (16) angeordnet ist.

7. Schutzvorrichtung nach einem der Ansprüche 5 oder 6,
dadurch gekennzeichnet,
daß die Riegelfläche (28) Bestandteil einer nach außen von der Längsachse (7) wegweisenden Nase (30) ist.

8. Schutzvorrichtung nach Anspruch 7,
dadurch gekennzeichnet,
daß die Nase (30) zur Überführung des Riegels (22) in die zurückgezogene Position mit einer Anlauffläche (31) versehen ist.

9. Schutzvorrichtung nach Anspruch 7,
dadurch gekennzeichnet,
daß die Nase (30) eine Vertiefung (32) zum Angriff eines Werkzeuges aufweist.

10. Schutzvorrichtung nach einem der Ansprüche 1 bis 5,
dadurch gekennzeichnet,
daß der Schutztrichter (12) mehrteilig ausgebildet ist und aus einem Bauteil, das den Befestigungsabschnitt (16) darstellt, sowie aus einem Schutzelement (17) besteht.

11. Schutzvorrichtung nach Anspruch 1,
dadurch gekennzeichnet,
daß zur formschlüssigen Verbindung zwischen dem Befestigungsabschnitt (16) des Schutztrichters (12) und der Anschlußkappe (9) die Anschlußkappe (9) mit um die Längsachse (7) umfangsverteilten und radial nach außen über die Sitzfläche vorstehenden Keilen (33) und der Befestigungsabschnitt (16) des Schutztrichters (12) mit entsprechend verteilten und ausgebildeten, parallel zur Längsachse (7) verlaufenden Nuten (34) versehen ist.

## Claims

1. A protective device for a driveshaft (1), wherein the driveshaft (1) is composed of two universal joints (2, 2') each comprising two joint yokes (3, 4) and a cross member (5) articulatably connecting said two joint yokes (3, 4), and of a connecting shaft (6) which consists of two plunging profiles (6', 6'') inserted into one another and which are respectively connected to one of the joint yokes (4) of the two universal joints (2, 2'), having two protective tubes (8, 8') which are inserted into one another and which are intended to be arranged co-axially relative to the connecting shaft (6) and relative to the longitudinal axis (7) of same, having one attaching cap (9), one sliding ring (10) and one protective cone (12) each per universal joint (2, 2'), with said protective cone (12) being provided for at least partially axially covering the associated universal joint (2, 2'), wherein one protective cone (12), one protective tube (8, 8') and one sliding ring (10) are connected to an attaching cap (9) and wherein the sliding ring (10) is intended to be supported in a groove (11) of a joint yoke (4) of the associated universal joint (2, 2'), with the protective cone (12) being releasably secured to the connecting cap (9), even if the protective device is mounted on the driveshaft, wherein the attaching cap (9) is provided with a seat face (15) on to which the protective cone (12) can be slid by means of a fixing portion (16) and secured by locking means and from which it can be released manually,
characterised in
that the fixing portion (16) of the protective cone (12) and the attaching cap (9) comprise means (33, 34) for providing a form-fitting connection between said two parts in the direction of rotation around the longitudinal axis (7), which means (33, 34), with reference to the longitudinal axis (7), permit the protective cone (12) to be axially slid on and pulled off; that the attaching cap (9) and the fixing portion (16) of the protective cone (12) are provided with stops (21, 26) for securing the protective cone (12) in a direction along the longitudinal axis (7) away from the attached protective tube (8, 8'); and that, furthermore, there is provided at least one resilient locking element (22) which can be transferred into a withdrawn position while the protective cone (12) is being slid by means of its fixing portion (16) on to the seat face (15) of the attaching cap (9) and which, after the mounted position of the two relative to one another has been reached, secures the fixing portion (16) in the direction towards the protective tube (8, 8') by means of a locking face (28) acting on a corresponding counter face (29, 29') of the fixing portion (16).

2. A protective device according to claim 1,
characterised in
that the resilient locking element (22) is associated with the sliding ring (10) and produced so as to be integral therewith.

3. A protective device according to any one of claims 1 or 2,
characterised in
that the sliding ring (10) consists of plastics, especially polyamide and is associated with the resilient locking element (22) for the purpose of supporting a metal leaf spring (27).

4. A protective device according to any one of claims 1 to 3,
characterised in
that there are provided two resilient locking elements (22) circumferentially offset around the longitudinal axis (7) by 180°.

5. A protective device according to any one of claims 1 to 4,
characterised in
that the counter face (29) of the fixing portion (16) is arranged in a radial aperture (23) of the fixing portion (16).

6. A protective device according to any one of claims 1 to 4,0
characterised in
that the counter face (29') of the fixing portion (16) is arranged in a cut-out (24) of the fixing portion (16).

7. A protective device according to any one of claims 5 or 6,
characterised in
that the locking face (28) forms part of a nose (30) projecting outwardly from the longitudinal axis (7).

8. A protective device according to claim 7,
characterised in
that for the purpose of transferring the locking element (22) into the withdrawn position, the nose (30) is provided with a stop face (31).

9. A protective device according to claim 7,
characterised in
that the nose (30) comprises an indentation (32) to allow engagement of a tool.

10. A protective device according to any one of claims 1 to 5,
characterised in
that the protective cone (12) is of the multi-part design, i.e. it consists of a component constituting the fixing portion (16) and of a protective element (17).

11. A protective device according to claim 1,
characterised in
that to achieve a form-fitting connection between the fixing portion (16) of the protective cone (12) and the attaching cap (9), the attaching cap (9) is provided with wedges (33) which are circumferentially distributed around the longitudinal axis (7) and project outwardly from the seat face, and the fixing portion (16) of the protective cone (12) is provided with correspondingly distributed and shaped grooves (34) extending parallel to the longitudinal axis (7).

## Revendications

1. Dispositif protecteur pour un arbre articulé (1), ledit arbre articulé
(1) étant constitué par deux joints à croisillons (2, 2'), qui comprennent chacun deux chapes de joints (3, 4) et un croisillon (5) qui relie ces deux chapes de façon articulée, et par un arbre de liaison (6) qui comprend deux profilés coulissants (6', 6") enfilés l'un dans l'autre et reliés chacun à l'une des chapes (4) des deux joints à croisillons (2, 2'), qui comprend deux tubes protecteurs (8, 8') enfilés l'un dans l'autre et destinés à être agencés coaxialement par rapport à l'arbre de liaison (6) et à l'axe longitudinal (7) de celui-ci, avec respectivement un capuchon de raccordement (9), une bague coulissante (10) et un entonnoir protecteur (12) pour chaque joint à croisillon (2, 2'), ledit entonnoir étant destiné à recouvrir au moins partiellement axialement le joint à croisillon associé (2, 2'), dans lequel un entonnoir protecteur (12), un tube protecteur (8, 8') ainsi qu'une bague coulissante (10) sont respectivement reliés à un capuchon de raccordement (9), et la bague coulissante (10) est destinée à se loger dans une gorge (11) d'une chape de joint (4) du joint à croisillon associé (2, 2'), et l'entonnoir protecteur (12) est fixé de façon détachable sur le capuchon de raccordement (9) même lorsque le dispositif protecteur est monté sur l'arbre articulé, ledit capuchon de raccordement (9) étant pourvu d'une surface d'assise (15) sur laquelle l'entonnoir protecteur (12) peut être coiffé par un tronçon de fixation (16) et fixé au moyen d'organes de verrouillage, et détachable par intervention manuelle,
caractérisé en ce que
le tronçon de fixation (16) de l'entonnoir protecteur (12) et le capuchon de raccordement (9) comportent des moyens (33, 34) pour assurer une liaison à coopération de formes entre ces deux éléments en direction de rotation autour de l'axe longitudinal (7), lesdits moyens permettant un enfilement et un enlèvement axial, par référence à l'axe longitudinal (7), de l'entonnoir protecteur (12), en ce que le capuchon de raccordement (9) et le tronçon de fixation (16) de l'entonnoir protecteur (12) sont pourvus de butées (21, 26) pour la fixation de l'entonnoir protecteur (12) dans une direction le long de l'axe longitudinal (7) en éloignement du tube protecteur raccordé (8, 8'), et en ce qu'il est en outre prévu au moins un verrou (22) à effet élastique qui, lors de l'enfilement de l'entonnoir protecteur (12) par son tronçon de fixation (16) sur la surface d'assise (15) du capuchon de raccordement (9), est susceptible d'être passé dans une position en retrait, et après avoir atteint la position de montage des deux éléments l'un par rapport à l'autre, ledit verrou fixe le tronçon de fixation (16) en direction du tube protecteur (8, 8') au moyen d'une surface de verrouillage (28) qui attaque une contre-surface correspondante (29, 29') du tronçon de fixation (16).

2. Dispositif protecteur selon la revendication 1, caractérisé en ce que le verrou à effet élastique (22) est associé à la bague coulissante (10) et réalisé d'une seule pièce avec celle-ci.

3. Dispositif protecteur selon l'une ou l'autre des revendications 1 et 2,
caractérisé en ce que la bague coulissante (10) est en matière plastique, en particulier en polyamide, et en ce qu'elle est associée au verrou à effet élastique (22) pour le soutien d'un ressort à lame métallique (27).

4. Dispositif protecteur selon l'une des revendications 1 à 3, caractérisé en ce qu'il est prévu deux verrous à effet élastique (22) décalés de 180° en sens périphérique autour de l'axe longitudinal (7).

5. Dispositif protecteur selon l'une des revendications 1 à 4, caractérisé en ce que la contre-surface (29) du tronçon de fixation (16) est agencée dans une traversée radiale (23) du tronçon de fixation (16).

6. Dispositif protecteur selon l'une des revendications 1 à 4, caractérisé en ce que la contre-surface (29') du tronçon de fixation (16) est agencée dans une découpe (24) du tronçon de fixation (16).

7. Dispositif protecteur selon l'une ou l'autre des revendications 5 et 6,
caractérisé en ce que la surface de verrouillage (28) fait partie d'un doigt (30) dirigé vers l'extérieur en éloignement de l'axe longitudinal (7).

8. Dispositif protecteur selon la revendication 7, caractérisé en ce que le doigt (30) est pourvu d'une surface d'engagement (31) pour le passage du verrou (22) dans la position en retrait.

9. Dispositif protecteur selon la revendication 7, caractérisé en ce que le doigt (30) comporte un renfoncement (32) pour l'engagement d'un outil.

10. Dispositif protecteur selon l'une des revendications 1 à 5,
caractérisé en ce que l'entonnoir protecteur (12) est réalisé en plusieurs parties, et comprend un composant qui représente le tronçon de fixation (16) ainsi qu'un élément protecteur (17).

11. Dispositif protecteur selon la revendication 1, caractérisé en ce que, pour la liaison à coopération de formes entre le tronçon de fixation (16) de l'entonnoir protecteur (12) et le capuchon de raccordement (9), le capuchon de raccordement (9) est pourvu de coins (33) répartis en périphérie autour de l'axe longitudinal (7) et dépassant radialement vers l'extérieur au-delà de la surface d'assise, et le tronçon de fixation (16) de l'entonnoir protecteur (12) est pourvu de gorges (34) réalisées et réparties de façon correspondante, qui s'étendent parallèlement à l'axe longitudinal (7).
